# EUROPEAN PATENT APPLICATION

(11) **EP 4 368 082 A2**
(43) Date of publication of application: **15.05.2024**
(21) Application number: 24162309.9
(22) Date of filing: 20.08.2019
(51) Int. Cl.: A47J 41/00

(54) **CHILLED BEVERAGE CONTAINER AND CHILLED BEVERAGE DISPENSING SYSTEMS AND METHODS**

(30) Priority: 10.09.2018 US 201862729290 P; 02.11.2018 US 201862754743 P
(62) Divisional of application: 19762567.6
(71) Applicant: Ember Technologies, Inc., Westlake Village, CA 91361 (US)
(72) Inventor: CLAYTON, Alexander, Westlake Village (US); TIMPERI, Mikko, Juhani, Westlake Village (US); LEITH, Daren John, Westlake Village (US); WAKEHAM, Christopher, Thomas, Westlake Village (US); EMMERT, Jacob, William, Westlake Village (US)
(74) Representative: Dehns

(57) **Abstract**

A drinkware container system includes a container body having an outer wall and an inner wall spaced from the outer wall to define a cavity. The inner wall extends between an opening of the container body and a base wall. The inner wall and base wall define a chamber that receives a liquid, the bottom wall spaced below the base wall. A cold-side heat sink is located in the cavity in thermal contact with the inner wall and/or the base wall. Optionally, a phase change material is located in the cavity and in thermal communication with the chamber and with the cold side heat sink, the phase change material spaced apart from the outer wall. The cavity can optionally be filled with an insulation material or be under vacuum. Optionally, the container body can have magnet(s) that can removably couple it with a cooling unit. The cooling unit can have a first heat sink configured to contact the container body when the container body is placed on the cooling unit, thermoelectric module(s) in thermal communication with the first heat sink, and a second heat sink in thermal communication with the thermoelectric module(s) so that the thermoelectric module(s) are interposed between the first and second heat sinks. The thermoelectric module(s) are operable to draw heat from the first heat sink and transfer it to the second heat sink to cool the first heat sink to thereby draw heat from the container body to cool it.

## Description

### BACKGROUND OF THE INVENTION

### Field of the Invention

The invention is directed to a container (e.g., cup, mug, tumbler, liquid container), and more particularly to a container (e.g., drinkware container such as cup, mug, tumbler, sleeve, cover, carafe) that maintains a liquid disposed in the container or in a separate vessel housed in the container in a cooled (e.g., chilled) state and systems and methods for delivering a beverage into the container.

### Description of the Related Art

Reusable drinkware containers (e.g., cups, mugs, travel mugs, water bottles, liquid containers) for holding liquids (e.g., beverages) therein are common and are sometimes made of plastic or metal materials. However, one common drawback of existing drinkware containers is their inability to maintain the liquid in a cooled or heated state for a prolonged period of time.

### SUMMARY

Accordingly, there is a need for improved containers (e.g., drinkware containers such as cups, mugs, carafes; covers, sleeves, etc.) that can maintain the contents (e.g., liquid, iced coffee, iced tea, milk, breast milk, infant formula, beer, wine, spirits, water, carbonated water, soft drinks, other beverages) in a cooled state over an extended period of time (e.g., 6 hours or less, 4 hours or less, 2 hours or less, about 1 hour, about 30 minutes, etc.).

In accordance with one aspect of the disclosure, a drinkware container system is provided. The container system comprises a container body that extends between a proximal end and a bottom wall at a distal end, the container body having an outer wall and an inner wall spaced inward of the outer wall to define a cavity therebetween. The inner wall extends between an opening at a proximal end of the container body and a base wall, the inner wall and base wall defining a chamber configured to receive and hold a liquid, the bottom wall spaced below the base wall. The container system also comprises a cold-side heat sink in the cavity and in thermal contact with one or both of the inner wall and the base wall. Optionally, the container system comprises a phase change material disposed in the cavity and in thermal communication with at least a portion of the chamber and with the cold side heat sink, the phase change material spaced apart from the outer wall. The cavity can optionally be filled with an insulation material between the cold side heat sink and the outer wall. Optionally, the container body can have one or more magnets that can removably couple the container body with a cooling unit.

In accordance with another aspect of the disclosure, a drinkware system is provided. The drinkware system includes a drinkware container having a container body that extends between a proximal end and a bottom wall at a distal end. The container body has an outer wall and an inner wall spaced inward of the outer wall to define a cavity therebetween, the inner wall extending between an opening at a proximal end of the container body and a base wall. The inner wall and base wall define a chamber configured to receive and hold a liquid, the bottom wall spaced below the base wall and a heat sink disposed in the cavity in thermal communication with one or both of the inner wall and the base wall. The drinkware system also includes a cooling unit configured to removably receive the drinkware container thereon and operable to cool one or both of the heat sink in the drinkware container and the inner wall and/or base wall of the drinkware container. The cooling unit comprises a first heat sink configured to contact the bottom wall of the drinkware container when the drinkware container is placed on the cooling unit, one or more thermoelectric modules in thermal communication with the first heat sink, and a second heat sink in thermal communication with the one or more thermoelectric modules so that the one or more thermoelectric modules are interposed between the first heat sink and the second heat sink. The one or more thermoelectric modules are operable to draw heat from the first heat sink and transfer it to the second heat sink to cool the first heat sink, the cooled first heat sink drawing heat from the drinkware container to cool the drinkware container.

In accordance with another aspect of the disclosure, a drinkware system includes a cooling unit configured to receive a beverage from a beverage dispensing unit at a first temperature and to cool the beverage to a second temperature below the first temperature before dispensing the beverage to a drinkware container. The cooling unit comprises a first heat sink configured to receive the dispensed beverage at a proximal end of the first heat sink and extending between the proximal end and distal end, the first heat sink having an inclined surface that inclines upward from the distal end to the proximal end. The cooling unit comprises one or more thermoelectric modules in thermal communication with the first heat sink, and a second heat sink in thermal communication with the one or more thermoelectric modules so that the one or more thermoelectric modules are interposed between the first heat sink and the second heat sink. The one or more thermoelectric modules are operable to draw heat from the first heat sink and transfer it to the second heat sink to cool the first heat sink, the cooled first heat sink cooling the beverage as it flows along a path between the proximal end and the distal end.

In accordance with another aspect of the disclosure, a drinkware system includes a drinkware container having a container body that extends between a proximal end and a bottom wall at a distal end, the container body having an outer wall and an inner wall spaced inward of the outer wall to define a cavity therebetween. The inner wall extends between an opening at a proximal end of the container body and a base wall, the inner wall and base wall defining a chamber configured to receive and hold a liquid, the bottom wall spaced below the base wall and a PCM disposed in the cavity in thermal communication with one or both of the inner wall and the base wall. The drinkware system includes a cooling unit configured to removably receive the drinkware container in an upside-down orientation thereon and operable to cool one or both of the PCM in the drinkware container and the inner wall and/or base wall of the drinkware container. The cooling unit comprises a first heat sink configured to contact one or both of the base wall and the inner wall of the drinkware container when the drinkware container is placed upside down on the cooling unit, one or more thermoelectric modules in thermal communication with the first heat sink, and a second heat sink in thermal communication with the one or more thermoelectric modules so that the one or more thermoelectric modules are interposed between the first heat sink and the second heat sink. The one or more thermoelectric modules are operable to draw heat from the first heat sink and transfer it to the second heat sink to cool the first heat sink, the cooled first heat sink drawing heat from the drinkware container to cool the drinkware container and to charge the PCM, allowing the drinkware container to maintain a liquid later dispensed therein in a cooled state.

In accordance with another aspect of the disclosure, a heating or cooling system for a container is provided. The system comprises a thermal unit having a body that defines a platform and one or more docking stations on the platform, the body having one or more openings in an outer surface of the body through which air is configured to pass. The thermal unit comprises a first heat sink configured to be in thermal communication with one or more surfaces of the body and/or one or more openings in the one or more docking stations, one or more thermoelectric modules in thermal communication with the first heat sink, and a second heat sink in thermal communication with the one or more thermoelectric modules so that the one or more thermoelectric modules are interposed between the first heat sink and the second heat sink. The one or more thermoelectric modules are operable to draw heat from one of the first and second heat sink and transfer it to the other of the first and second heat sink to thereby cool or heat the first heat sink. One or more fans in fluid communication with the first heat sink and configured to generate a flow of air past the first heat sink and through the one or more openings in the one or more docking stations, the flow of air being cooled or heated as it flows past the first heat sink and through the one or more openings in the one or more docking stations.

### BRIEF DESCRIPTION OF THE DRAWINGS

Figure 1A is a schematic view of a drinkware container and cooling unit for cooling the drinkware container.
Figure 1B is a schematic view of the drinkware container and cooling unit for cooling the drinkware container, the drinkware container disposed below a beverage dispensing unit.
Figure 2 is a schematic view of a drinkware container and cooling unit for cooling the drinkware container.
Figure 3 is a schematic view of a drinkware container and cooling unit for cooling the drinkware container.
Figure 4 is a schematic view of a drinkware container and cooling unit for cooling the drinkware container.
Figure 5 is a schematic view of a cooling unit disposed below a beverage dispensing unit, the cooling unit operable to cool the beverage and deliver it to a drinkware container.
Figure 6 is a schematic view of a cooling unit disposed below a beverage dispensing unit, the cooling unit operable to cool the beverage and deliver it to a drinkware container.
Figure 7 is a schematic view of a cooling unit disposed below a beverage dispensing unit, the cooling unit operable to cool the beverage and deliver it to a drinkware container.
Figure 8A is a schematic view of a drinkware container and cooling unit for cooling the drinkware container.
Figure 8B is a schematic of a multi-unit cooling rack for cooling multiple drinkware containers.
Figure 9 is a schematic view of a cooling unit disposed below a beverage dispensing unit, the cooling unit operable to cool the beverage and deliver it to a drinkware container, and a multi-unit cooling rack for cooling multiple drinkware containers prior to dispensing the beverage.
Figure 10 is a schematic view of a cooling or heating unit.
Figure 11 is a schematic cross-sectional view of a cooling or heating unit.

### DETAILED DESCRIPTION

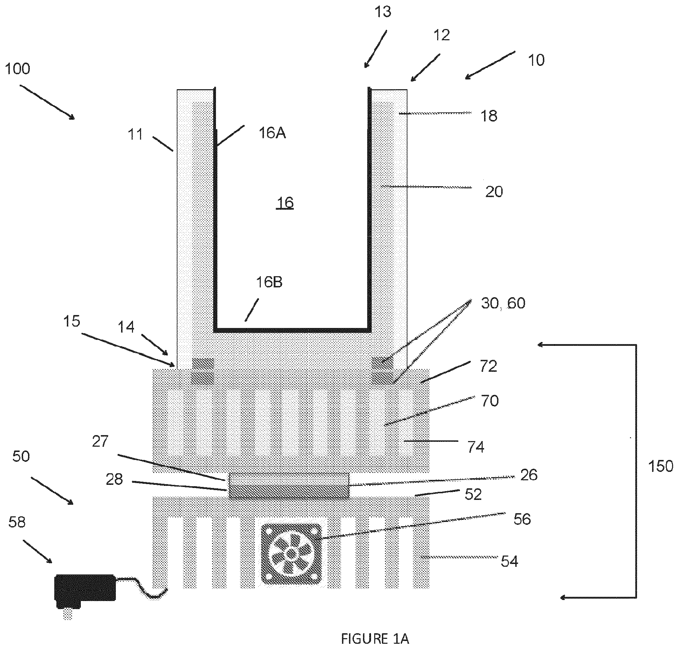

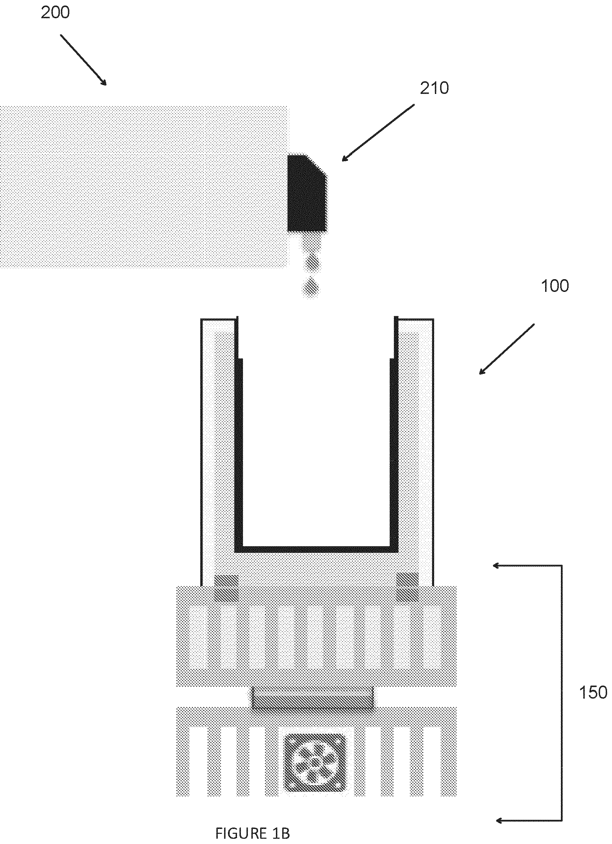

Figures 1A-1B show a schematic cross-sectional view of a drinkware container 100. Optionally, the drinkware container 100 is cylindrical and symmetrical about a longitudinal axis (e.g., a central longitudinal axis of the container 100), and one of ordinary skill in the art will recognize that the features shown in cross-section in FIGS. 1A-1B are defined by rotating them about the axis to define the feature of the cylindrical container.

The drinkware container 100 is optionally a cooled drinkware container operable to cool the contents of the container and/or maintain the contents of the container in a cooled or chilled state for a prolonged period of time (e.g., 1 hour, 2 hours, 3 hours, 4 hours, 5 hours, etc.). The drinkware container 100 has a body 10 with an outer wall 11 that extends between a proximal end 12 that has an opening 13 and a distal end 14 having a base 15. Optionally, the opening 13 can get selectively closed by a lid (not shown) removably attached to the proximal end 12. The body 10 has an inner wall 16A and a base wall 16B that defines an open chamber 16 that can receive and hold a liquid (e.g., water, tea, coffee, milk, etc.) therein. Optionally, the body 10 can be made of metal (e.g., stainless steel). In another implementation, the body 10 can be made of plastic. In another implementation, the inner wall 16A and base wall 16B can be made of metal and the outer wall 11 can be made of a plastic or a ceramic material.

In one implementation, the body 10 has a cavity 18 (e.g., annular cavity or chamber) between the inner wall 16A and the outer wall 11. Optionally, the cavity 18 can be under vacuum. In another implementation, the cavity 18 can be filled with air but not be under vacuum. In another implementation the cavity 18 can be filled with an insulation material (e.g., foam).

A heat sink (e.g., cold-side heat sink) 20 is disposed in the cavity 18 and in thermal communication with the inner wall 16A and/or base well 16B. Optionally, the heat sink 20 can be in direct contact with the inner wall 16A and/or base wall 16B to thermally communicate with the chamber 16. The heat sink 20 can optionally have a cylindrical shape. In one implementation, the heat sink 20 is made of metal. As further described below, the heat sink 20 effects heat transfer with liquid in the chamber 16 via the inner wall 16A and/or base wall 16B.

The drinkware container body 10 can be removably coupled with a cooling unit 150 via one or more magnets (e.g., permanent magnets) 30 in the container body 10 and one or more magnets 60 in the cooling unit 150. In another implementation the one or more magnets 30 are excluded; for example, the base 15 can be made of a magnetic material (e.g., a metal). In one implementation, the one or more magnets 60 are optionally permanent magnets. In another implementation, the one or more magnets 60 are optionally electromagnets whose polarity can be selectively controlled by a controller of the cooling unit 150 (e.g., via user input via a user interface of the cooling unit 150 or wirelessly via an electronic device such as a smartphone) to allow selective coupling and decoupling of the drinkware container 100 to the cooling unit 50. In another implementation, the one or more magnets 60 are excluded. In one implementation, the cooling unit 150 is integrated into (e.g., a part of) a beverage dispensing machine (e.g., coffee maker, tea maker) and provides a base on which the drinkware container body 10 can be placed prior to or during the dispensing of a beverage from the dispensing machine.

The cooling unit 150 can include a cold side heat sink 70 with a body 72 that optionally includes one or more volumes (e.g., a plurality of volumes) of phase change material (PCM) 74 via which the cold side heat sink 70 can function as a reservoir (e.g., cold storage reservoir). The PCM 74 can be disposed in one or more cavities in the body 72. The body 72 can be made of a thermally conductive material (e.g., metal). The cold side heat sink 70 can include the one or more magnets 60. The cooling unit 150 can include one or more thermoelectric modules (e.g., Peltier elements) 26 in thermal contact with the body 72 of the cold storage reservoir 70 and in contact with a heat sink unit 50. The cold side 27 of the one or more thermoelectric modules 26 can be in contact with the body 72 and the hot side 28 of the one or more thermoelectric modules 26 can be in contact with a surface 52 of a heat sink 54 (e.g., hot side heat sink) of the heat sink unit 50. The heat sink 54 can have one or more (e.g., a plurality of) fins. Optionally, the heat sink unit 50 has a fan 56. The heat sink unit 50 can optionally have a connector 58 (e.g., wall outlet connector) for connecting the heat sink unit 50 to a power source. In another implementation, the heat sink unit 50 can instead have one or more batteries (e.g., rechargeable batteries).

With continued reference to FIG. 1A-1B, in operation the cooling unit 150 operates to draw heat out of (e.g., cool) the container body 10. Power is provided to the one or more thermoelectric modules 26 (e.g., via a connection of the connector 58 with a wall outlet, via one or more batteries in the cooling unit 150), which operate to draw heat from (e.g., cool) the cold side heat sink 70. The hot side of the thermoelectric module(s) 26 would transfer heat from the cold side heat sink 70 to the heat sink 54. Optionally, the fan 56 is operable to dissipate heat from the heat sink 54 along with the dissipation of heat via the fins in the heat sink 54. As the one or more thermoelectric modules 26 cools the cold side heat sink 70, the thermoelectric module(s) 26 can optionally also charge the PCM 74 in the side heat sink 70. In turn, the cold storage reservoir 70 operates to remove heat from (e.g., cool) the drinkware container 100 placed on (e.g., coupled to) the cold side heat sink 70.

Advantageously, the thermoelectric module(s) 26 charge the PCM 74 in the cold side heat sink 70, thereby allowing the cooling unit 150 to be used to cool a number of drinkware containers 100 (e.g., sequentially) before the PCM 74 would need to be recharged (e.g., by the thermoelectric module(s) 26). In one implementation, the cold side heat sink 70, once the PCM 74 is charged, can allow the cooling unit 150 to cool 2 or more (e.g., 2, 3, 4, 5, 6, etc.) drinkware containers 100 sequentially placed on the cold side heat sink 70 before the PCM 74 needs to be recharged. Charging the PCM 74 as described above, means causing the PCM 74 to transition from one state (e.g., liquid) to a second state (e.g., solid), such as by cooling the PCM 74 below a transition temperature of the PCM 74. Optionally, PCM 74 optionally has a low transition temperature (e.g., transition temperature less than 10 degrees C, less than 5 degrees C, etc.). For example, the PCM 74 can have a transition temperature of approximately 4 degrees Celsius (e.g., approximately 40 degrees Fahrenheit).

As discussed above, the cooling unit 150 can be incorporated into (e.g., be built into, be an accessory that can be added to, removably coupled to) a beverage dispensing unit 200 (e.g., a coffee dispensing machine) and serve as a base on which the drinkware container 100 is placed to receive the beverage from a dispensing nozzle 210 of the beverage dispensing unit 200. In one implementation, the drinkware container 100 is placed on the cooling unit 150 for a period of time (e.g., 30 seconds, 1 minute, 2 minutes, 3 minutes) before the beverage is dispensed from the dispensing nozzle 210, allowing the cooling unit 150 to cool the drinkware container 100 before the beverage is dispensed. In another implementation, the cooling unit 150 cools the drinkware container 100 after the beverage has been dispensed into the drinkware container 100. In still another implementation, the cooling unit 150 cools the drinkware container 100 while the beverage is dispensed from the dispensing nozzle 210 into the drinkware container 100.

The cooling unit 150 reduces the temperature of the beverage dispensed into the drinkware container 100 from a dispensing temperature T0 (e.g., 170F, 180 F, 190 F, etc.) to a cooled drinking temperature T1 (e.g., 40 F, 45 F, 50 F, 55F, etc.). In one implementation, the cooling unit 150 reduces the temperature of the beverage to the cooled drinking temperature T1 in 5 minutes or less (e.g., in 4 minutes or less, in 3 minutes or less, in 2 minutes or less, in 1 minute or less, in 30 seconds or less, in about 15 seconds, etc.). Once the drinkware container 100 is removed from the cooling unit 150, the heat sink 20 in the drinkware container 100 operates to maintain the liquid in the chamber 16 at a cool temperature (e.g., the cooled drinking temperature (T1)) for a prolonged period of time, as discussed above.

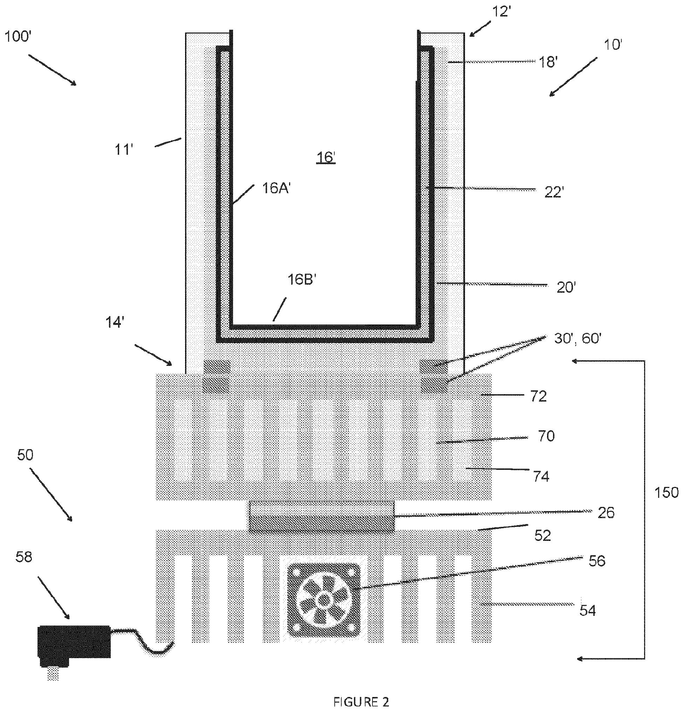

Figure 2 schematically illustrates a drinkware container 100' and cooling unit 150. Some of the features of the drinkware container 100' are similar to features in the drinkware container 100 in FIGS. 1A-1B. The cooling unit 150 in FIG. 1A. Thus, references numerals used to designate the various components of the drinkware container 100 and cooling unit 150 in FIGS. 1A-1B are identical to those used for identifying the corresponding components of the drinkware container 100' and cooling unit 150 in FIG. 2, except that a " ' " is added to the numerical identifiers. Therefore, the structure and description for the various components of the drinkware container 100 and cooling unit 150 in FIGS. 1A-1B is understood to also apply to the corresponding components of the drinkware container 100' and cooling unit 150 in FIG. 2, except as described below.

The drinkware container 100' differs from the drinkware container 100 in that a phase change material (PCM) 22' (e.g., thermal core) is disposed about the chamber 16 (e.g., between the inner wall 16A' and the heat sink 20', so that the PCM 22' operates in series with the heat sink 20'). Optionally, the phase changer material 22' is a solid-to-solid PCM. In another implementation, the phase change material 22' is a solid-to-liquid PCM. Optionally, the phase change material 22' is disposed within a chamber circumferentially about the inner wall 16A'. Optionally, the phase change material 22' is additionally (or alternatively) disposed within a chamber adjacent the base wall 16B'. The phase change material 22' optionally has a low transition temperature (e.g., transition temperature of less than 10 degrees C, less than 5 degrees C, etc.), where the transition temperature is the temperature at which the PCM 22' changes from one state (e.g., liquid) to another state (e.g., solid). For example, the phase change material 22' can have a transition temperature of approximately 4 degrees Celsius (e.g., approximately 40 degrees Fahrenheit).

In use, the cooling unit 150 operates to draw heat out of (e.g., cool) the container body 10'. Power is provided to the one or more thermoelectric modules 26 (e.g., via a connection of the connector 58 with a wall outlet, via one or more batteries in the cooling unit 150), which operate to draw heat from (e.g., cool) the cold side heat sink 70. The hot side of the thermoelectric module(s) 26 would transfer heat from the cold side heat sink 70 to the heat sink 54. Optionally, the fan 56 is operable to dissipate heat from the heat sink 54 along with the dissipation of heat via the fins in the heat sink 54. As the one or more thermoelectric modules 26 cools the cold side heat sink 70, the thermoelectric module(s) 26 can optionally also charge the PCM 74 in the cold side heat sink 70. In turn, the cold side heat sink 70 operates to remove heat from (e.g., cool) the drinkware container 100' placed on (e.g., coupled to) the cold side heat sink 70. Optionally, the cold side heat sink 70 cools the drinkware container 100' so as to charge the PCM 22' (e.g., causing the PCM 22' to transition from one state to another, such as from liquid to solid), allowing the PCM 22' to absorb heat once a heated liquid is poured into the drinkware container 100'.

In one implementation, the container 100', 100‴ can be placed in a freezer or refrigerator (not shown), where the PCM 22', 22‴ is charged (e.g., transitions to a state where it can later absorb heat from a liquid poured into it). The container 100' can then be removed from the freezer or refrigerator and placed on the cooling unit 150 to receive beverage from beverage dispensing unit 200 via dispensing nozzle 210.

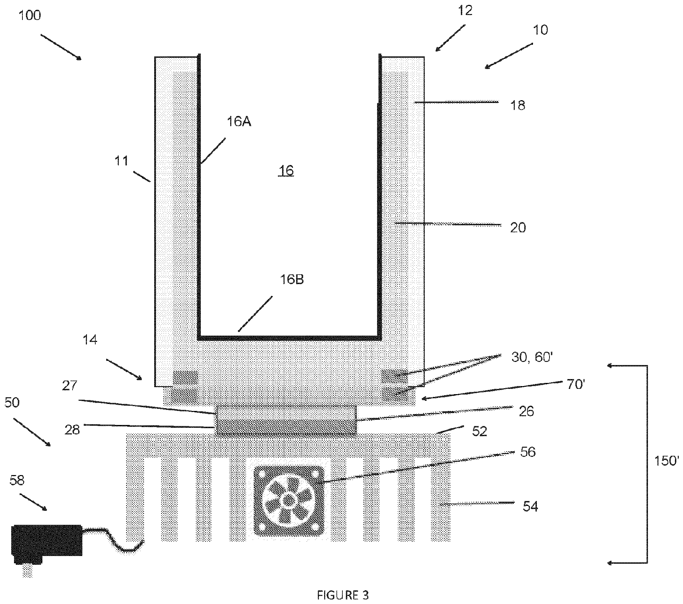

Figure 3 schematically illustrates a drinkware container 100 and cooling unit 150'. The features of the drinkware container 100 are identical to features in the drinkware container 100 in FIGS. 1A-1B. Some of the features of the cooling unit 150' in FIG. 3 are similar to those in the cooling unit 150 in FIG. 1A. Thus, references numerals used to designate the various components of the drinkware container 100 and cooling unit 150 in FIGS. 1A-1B are identical to those used for identifying the corresponding components of the drinkware container 100 and cooling unit 150' in FIG. 3, except that a " ' " is added to the numerical identifiers. Therefore, the structure and description for the various components of the drinkware container 100 and cooling unit 150 in FIGS. 1A-1B is understood to also apply to the corresponding components of the drinkware container 100 and cooling unit 150' in FIG. 3, except as described below.

As discussed above, the drinkware container 100 in FIG. 3 is identical to the drinkware container 100 in FIGS. 1A-1B. The cooling unit 150' differs from the cooling unit 150 in that the cold side heat sink 70' excludes the PCM 74'. Optionally, the one or more thermoelectric modules 26 (e.g., Peltier elements) can be a plurality of thermoelectric modules 26 (e.g., 2 or more, 4 or more, 6 or more, 10 or more, about 12-15 thermoelectric modules) that can operate to draw heat from the drinkware container 100 to cool a liquid poured into the drinkware container 100 from the dispensing temperature T0 to a cooled drinking temperature T1, as described above in connection with FIG. 1A-1B.

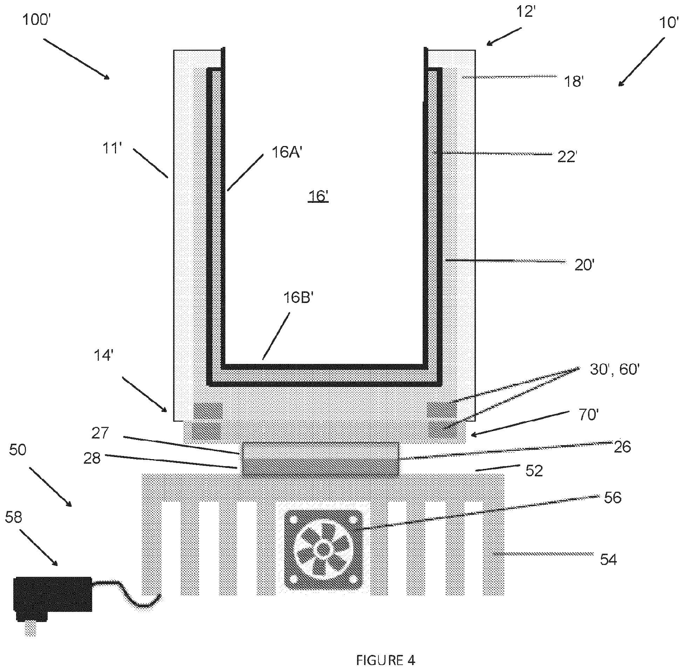

Figure 4 schematically illustrates a drinkware container 100' and cooling unit 150'. The features of the drinkware container 100' are identical to features in the drinkware container 100' in FIG. 2. The features of the cooling unit 150' in FIG. 4 are identical to those of the cooling unit 150' in FIG. 3. Thus, references numerals used to designate the various components of the drinkware container 100' in FIG. 2 and cooling unit 150' in FIG. 3 are identical to those used for identifying the corresponding components of the drinkware container 100' and cooling unit 150' in FIG. 4. Therefore, the structure and description for the various components of the drinkware container 100' in FIG. 2 and cooling unit 150' in FIG. 3 is understood to also apply to the corresponding components of the drinkware container 100' and cooling unit 150' in FIG. 4.

As discussed above in connection with FIGS. 2 and 3, the one or more thermoelectric modules 26 are powered (e.g., via the connector 58 plugged into a wall outlet, via batteries in the cooling unit 150') to draw heat from the cold side heat sink 70' which in turn draws heat from the drinkware container 100' when it is placed on the cold side heat sink 70'. Optionally, such heat removal can result in charging of the PCM 22' of the drinkware container 100'. The drinkware container 100' can therefore be cooled prior to (or simultaneously with) the dispensing of a beverage into the drinkware container 100'. Optionally, the PCM 22' in the container 100' can be charged by storing the container 100' in a refrigerator or freezer for a period of time (e.g., 5 min, 10 min, 15 min, 20 min, etc.) and then placed on the cooling unit 150' prior to the dispensation of the beverage into the container 100'.

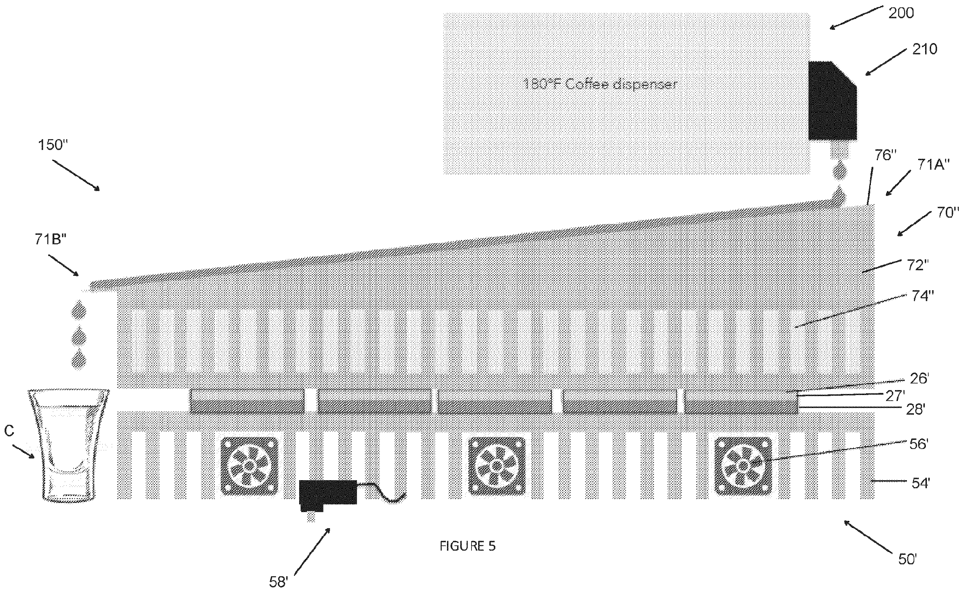

Figure 5 schematically illustrates a cooling unit 150" operable to cool a beverage dispensed from a beverage dispensing unit 200 via a dispensing nozzle 210 and directing the cooled beverage to a drinkware container C. Some of the features of the cooling unit 150" in FIG. 5 are similar to those in the cooling unit 150 in FIG. 1A. Thus, references numerals used to designate the various components of the cooling unit 150 in FIG. 1A are identical to those used for identifying the corresponding components of the cooling unit 150" in FIG. 5, except that a " " " is added to the numerical identifiers. Therefore, the structure and description for the various components of the cooling unit 150 in FIG. 1A is understood to also apply to the corresponding components of the cooling unit 150" in FIG. 5, except as described below.

The cooling unit 150" can include a cold side heat sink 70" with a body 72" that optionally includes one or more volumes (e.g., a plurality of volumes) of phase change material (PCM) 74" via which the cold side heat sink 70" can function as a reservoir (e.g., cold storage reservoir). The PCM 74" can be disposed in one or more cavities in the body 72". The body 72" can be made of a thermally conductive material (e.g., metal).

In the implementation shown in FIG. 5, the body 72" can have an inclined surface or tray 76" that extends from a proximal end 71A" to a distal end 71B" with the surface 76" inclined upward from the distal end 71B" to the proximal end 71A". The dispensing nozzle 210 can dispense liquid (e.g. a beverage) onto the surface 76" (e.g., by dripping the liquid onto the surface 76") at or near the proximal end 71A" and the liquid can flow down the surface 76" toward the distal end 71B", and fall off the distal end 71B" into the drinkware container C. In one implementation, the surface 76" is substantially planar (e.g., flat). In another implementation, the surface 76" has a groove or recessed channel (e.g., one or more grooves or channels) defined therein that extends between (e.g., from) the proximal end 71A" and the distal end 71B", and the liquid dispended from the dispensing nozzle 210 can flow along the groove or recessed channel of the surface 76" to the distal end 71B" where it is dispensed into the drinkware container C. Advantageously, the groove or channel can control the direction of the liquid as it flows down the inclined surface 76", inhibiting the liquid from exiting the surface 76" at a location other than over the drinkware container C. Advantageously, the cooling unit 150" with the surface 76" (with or without a groove or channel) would be easily cleaned after use. For example, the cooling unit 150" can be an accessory that can be removably installed in a beverage dispensing machine that includes the beverage dispensing unit 200, and at least a portion of the cooling unit 150", such as the body 72" can be removed from the beverage dispensing machine as needed and washed or cleaned in other suitable manners.

In another implementation, the path that the dispensed liquid would take on the surface 76" would be other than a straight path between (e.g., from) the proximal end 71A" and the distal end 71B". For example, the path can be curved (e.g., zig-zag, labyrinthine) between the proximal end 71A" and the distal end 71B", which can advantageously allow the liquid to be in contact with the cooled surface 76" for a longer period of time, as compared with a straight path, to achieve the desired dispensing temperature at the distal end 71B". In one implementation, the cooling unit 150" cools the liquid dispensed on the surface 76" for a predetermined period of time (e.g., 30 seconds, 1 minute, 2 minutes, 3 minutes) as it flows along the surface 76" before the beverage is dispensed from the distal end 71B" into the drinkware container C.

In another implementation, the path that the dispensed liquid would take from the proximal end 71A" to the distal end 71B" would run through one or more channels or tubes defined inside the body 72". In this implementation, the liquid would not flow on top of the surface 76" but would instead flow within channels or tubes within the body 72". In one implementation, the path could be a straight path between (e.g., from) the proximal end 71A" and the distal end 71B". In another implementation, the path could be a curved (e.g., zig-zag, labyrinthine) path between (e.g., from) the proximal end 71A" and the distal end 71B".

The cooling unit 150" can include one or more thermoelectric modules (e.g., Peltier elements) 26' (e.g., a plurality of separate modules) in thermal contact with the body 72" of the cold side heat sink 70" and in contact with one or more heat sink units 50' (hot side heat sink units). The cold side 27' of the one or more thermoelectric modules 26' can be in contact with the body 72" and the hot side 28' of the one or more thermoelectric modules 26' can be in contact with a surface 52' of a heat sink 54' (e.g., hot side heat sink) of the heat sink unit 50'. The heat sink 54' can have one or more (e.g., a plurality of) fins. Optionally, the heat sink unit 50' has one or more fans 56' (e.g., a plurality of fans). The heat sink unit 50' can optionally have a connector 58' (e.g., wall outlet connector) for connecting the heat sink unit 50' to a power source. In another implementation, the heat sink unit 50' can instead have one or more batteries (e.g., rechargeable batteries).

With continued reference to FIG. 5, in operation the cooling unit 150" operates to draw heat out of (e.g., cool) the body 72" (e.g., the surface 76"). Power is provided to the one or more thermoelectric modules 26' (e.g., via a connection of the connector 58' with a wall outlet, via one or more batteries in the cooling unit 150"), which operate to draw heat from (e.g., cool) the cold side heat sink 70". The hot side of the thermoelectric module(s) 26' would transfer heat from the cold side heat sink 70" to the heat sink 54'. Optionally, the one or more fans 56' is operable to dissipate heat from the heat sink 54' along with the dissipation of heat via the fins in the heat sink 54'. As the one or more thermoelectric modules 26' cools the cold side heat sink 70", the thermoelectric module(s) 26' can optionally also charge the PCM 74" (e.g., plurality of PCM 74" volumes) in the body 72". In turn, the PCM 74" operates to remove heat from (e.g., cool) the body 72".

Advantageously, the thermoelectric module(s) 26' charge the PCM 74" in the cold side heat sink 70", thereby allowing the cooling unit 150" to be used to cool the flow of dispensed fluid for a prolonged period of time (e.g., for continuous dispensing of liquid) before the PCM 74" would need to be recharged (e.g., by the thermoelectric module(s) 26'). Charging the PCM 74" as described above, means causing the PCM 74" to transition from one state (e.g., liquid) to a second state (e.g., solid), such as by cooling the PCM 74" below a transition temperature of the PCM 74". Optionally, PCM 74" optionally has a low transition temperature (e.g., transition temperature less than 10 degrees C, less than 5 degrees C, etc.). For example, the PCM 74" can have a transition temperature of approximately 4 degrees Celsius (e.g., approximately 40 degrees Fahrenheit).

The cooling unit 150" reduces the temperature of the beverage dispensed into the drinkware container C from a dispensing temperature T0 (e.g., 170F, 180 F, 190 F, etc.) at the dispensing nozzle 210 to a cooled drinking temperature T1 (e.g., 40 F, 45 F, 50 F, 55F, etc.). In one implementation, the cooling unit 150" reduces the temperature of the beverage to the cooled drinking temperature T1 in 5 minutes or less (e.g., in 4 minutes or less, in 3 minutes or less, in 2 minutes or less, in 1 minute or less, in 30 seconds or less, in about 15 seconds, etc.).

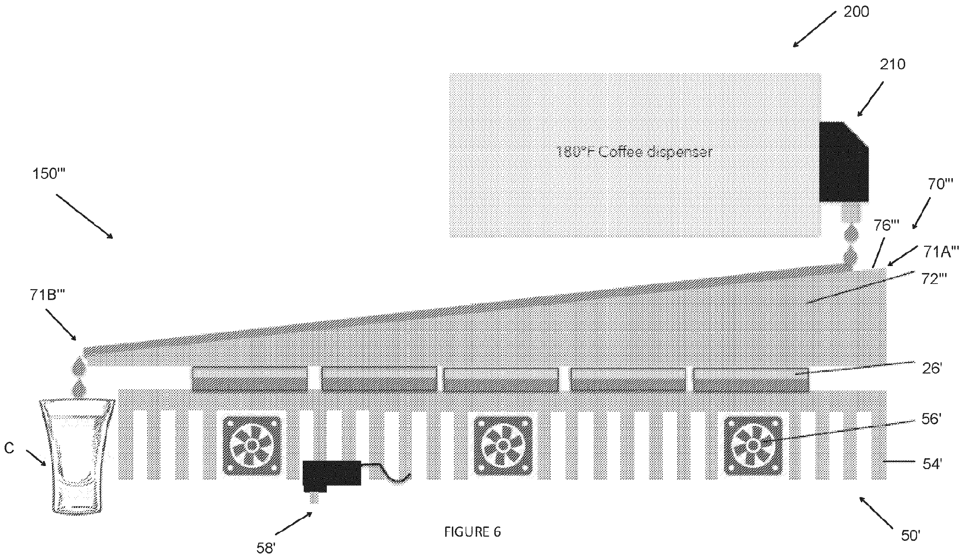

Figure 6 schematically illustrates a cooling unit 150" ' operable to cool a beverage dispensed from a beverage dispensing unit 200 via a dispensing nozzle 210 and directing the cooled beverage to a drinkware container C. Some of the features of the cooling unit 150‴ in FIG. 6 are similar to those in the cooling unit 150" in FIG. 5. Thus, references numerals used to designate the various components of the cooling unit 150" in FIG. 5 are identical to those used for identifying the corresponding components of the cooling unit 150‴ in FIG. 6, except that a " ‴ " is added to the numerical identifiers. Therefore, the structure and description for the various components of the cooling unit 150" in FIG. 5 is understood to also apply to the corresponding components of the cooling unit 150‴ in FIG. 6, except as described below.

The cooling unit 150'" differs from the cooling unit 150" in that the PCM 74" is excluded from the body 70'". The one or more thermoelectric modules 26' (e.g., Peltier elements) can be a plurality of thermoelectric modules 26' (e.g., 2 or more, 4 or more, 6 or more, 10 or more, about 12-15 thermoelectric modules) that can operate to draw heat from the body 72'" (e.g., draw heat from the surface 76''') to cool the liquid dispensed from the dispensing nozzle 210 onto the surface 76'" from the dispensing temperature T0 to a cooled drinking temperature T1, as described above in connection with FIG. 5.

In another implementation, the path that the dispensed liquid would take from the proximal end 71A‴ to the distal end 71B'" would run through one or more channels or tubes defined inside the body 72'". In this implementation, the liquid would not flow on top of the surface 76'" but would instead flow within channels or tubes within the body 72'". In one implementation, the path could be a straight path between (e.g., from) the proximal end 71A‴ and the distal end 71B‴. In another implementation, the path could be a curved (e.g., zig-zag, labyrinthine) path between (e.g., from) the proximal end 71A‴ and the distal end 71B'".

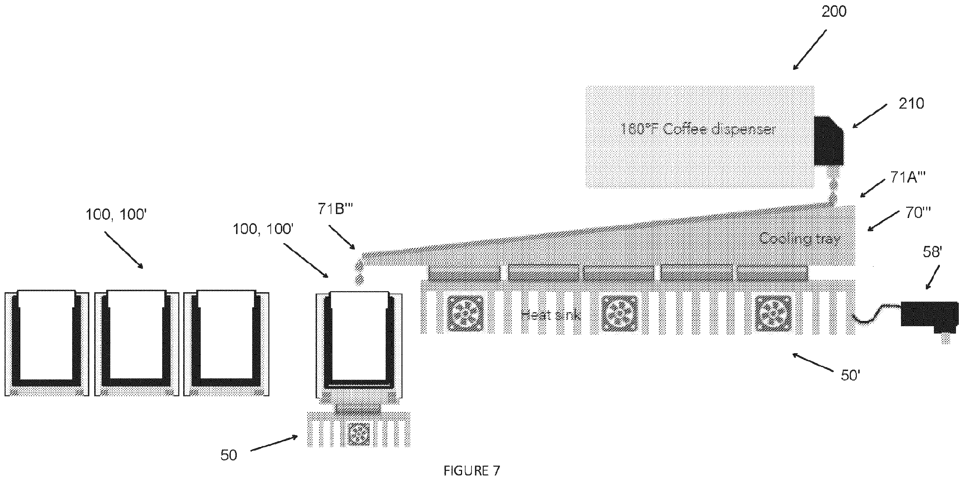

Figure 7 schematically illustrates the cooling unit 150‴ of FIG. 6 at least partially disposed under a beverage dispensing unit 200, and used to dispense a liquid (e.g., cooled coffee, cooled tea) into a drinkware container, such as the drinkware container 100 of FIG. 1A or the drinkware container of FIG. 2. Optionally, the drinkware container 100, 100' is disposed on a cooling unit 150' when the liquid is dispensed from the distal end 71B'" of the cooling unit 150'" into the drinkware container 100, 100'. The cooling unit 150' can operate to remove heat (e.g., cool) the drinkware container 100, 100' as discussed above. As discussed previously, in one implementation, the cooling unit 150' can be incorporated into (e.g., be part of, be an accessory coupleable to) a beverage dispensing machine (e.g., coffee machine) that includes the beverage dispensing unit 200 and that includes (e.g., removably receives, as an accessory) the cooling unit 150'".

In one implementation, the drinkware container 100, 100' is placed on the cooling unit 150' (of the beverage dispensing machine). Optionally, the beverage dispensing machine can begin (e.g., automatically begin) the beverage brewing process upon such placement of the drinkware container 100,100' (e.g., via a sensor that senses the placement and communicates a signal to electronics of the beverage dispensing machine to start the brewing process). The cooling unit 150' cools the drinkware container 100, 100'. Where it is the drinkware container 100', the cooling unit 150' charges the PCM 22' in the drinkware container 100'. The brewed beverage is then dispensed (via the nozzle 210) onto the body 72'" (e.g., cooling tray) at the brewed temperature T0 (e.g., 180 F). As the liquid flows down the body 72'" toward the distal end 71B‴, the liquid is cooled to a dispensing temperature T1 (e.g., 100 F) and dispensed from the distal end 71B'" into the drinkware container 100, 100'. The cooled drinkware container 100, 100' further cools the liquid to a desired drinking temperature T2 (e.g., iced coffee or iced tea drinking temperature, such as 40 F, 45F, 50F, etc.). In another implementation, the cooling unit 150'" can cool the liquid down to the desired drinking temperature T2 before the liquid is dispensed from the distal end 71B‴. The drinkware container 100, 100' can then be removed from the cooling unit 150' (e.g., removed from the beverage dispensing machine). The drinkware container 100, 100' (e.g., the PCM 22') will continue to maintain the beverage in a cooled state for a prolonged period of time (e.g., about 4 hours, about 3 hours, about 2 hours, about 1 hour, about 30 minutes, about 15 minutes).

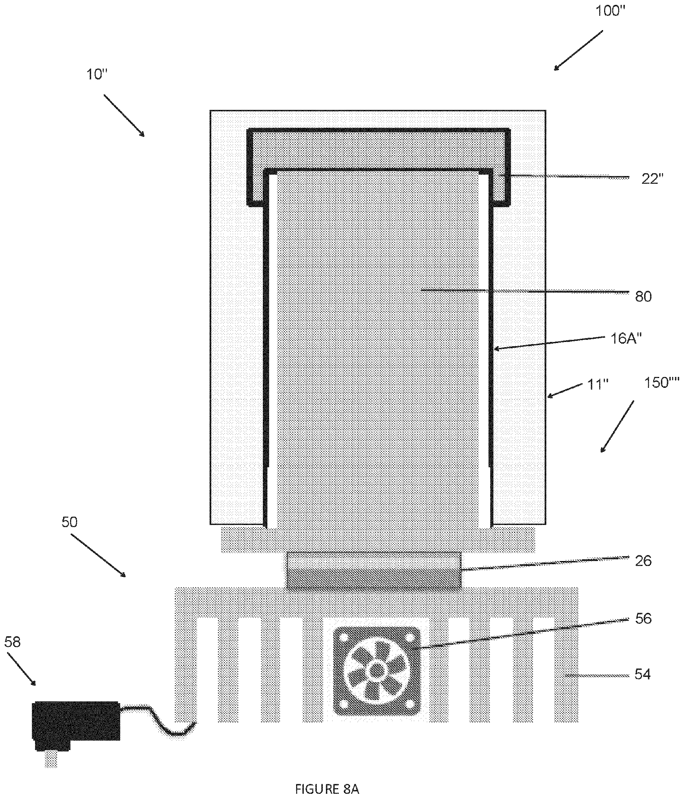

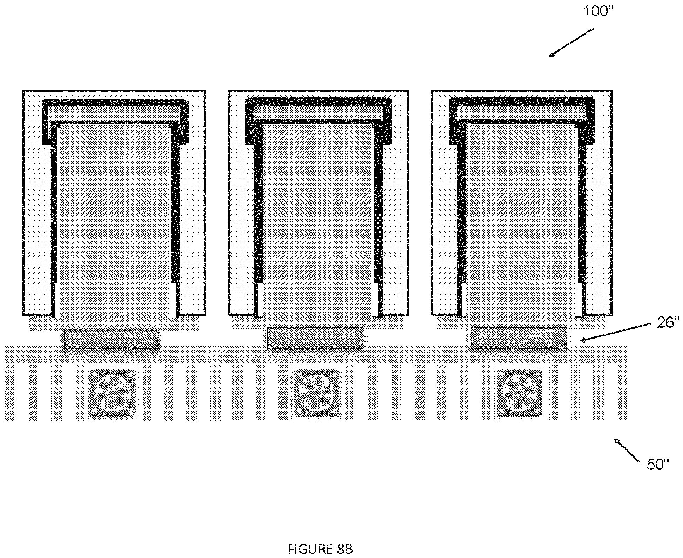

FIGS. 8A-8B schematically shows a cooling unit 150ʺʺ (e.g., cooling rack) operable to cool one or more drinkware containers 100". FIG. 8A shows the cooling unit 150ʺʺ for cooling a single drinkware container 100" at a time. FIG. 8B shows a cooling unit 150ʺʺ for cooling more than one (e.g., two, three, four, etc.) drinkware containers 100" at a time. Certain components of the cooling unit 150ʺʺ are similar to components of the cooling unit 150 in FIG. 1A. Therefore, references numerals used to designate certain components of the cooling unit 150ʺʺ in FIGS. 8A-8B are identical to those used for identifying the corresponding components of the cooling unit 150 in FIG. 1A. Therefore, the structure and description for certain components of the cooling unit 150 in FIG. 1A is understood to also apply to the corresponding components of the cooling unit 150ʺʺ in FIG. 8A-8B, except as described below.

The cooling unit 150ʺʺ has a heat sink 80 (e.g., cold side heat sink) thermally coupled to a cold side 27 of one or more thermoelectric elements 26. In one implementation, the heat sink 80 can optionally have one or more volumes (e.g., a plurality of volumes) of phase change material (PCM) (e.g., similar to the PCM volumes 74 in FIG. 2) via which the heat sink 80 can function as a reservoir (e.g., cold storage reservoir), allowing the heat sink 80 to cool more than one drinkware containers 100" sequentially (e.g., one after the other). A hot side 28 of the one or more thermoelectric elements 26 thermally couple to one or more heat sinks 54 (e.g., hot side heat sink) of a heat sink unit 50. Optionally, the cooling unit 150ʺʺ has one or more fans 56 operable to dissipate heat from the one or more heat sinks 54 along with heat dissipation via one or more fins of the one or more heat sinks 54. The cooling unit 150ʺʺ can optionally include a power connector 58 that can be coupled to wall outlet. Alternatively, the cooling unit 150ʺʺ can be powered by one or more batteries.

The cold side heat sink 80 can have an elongate body sized to extend into the chamber 16" of the drinkware container 100" when the container 100" is turned upside down and placed over the cold side heat sink 80. Optionally, the drinkware container 100" has a PCM portion 22" that comes in thermal contact (e.g., direct contact) with at least a portion of (e.g., an end of) the cold side heat sink 80. The cavity in the drinkware container 100" between the inner wall 16A" and the outer wall 11" can in one embodiment be under vacuum. Optionally, the PCM portion 22" is defined adjacent the base wall 16B" of the drinkware container 100" (e.g., only defined adjacent the base wall 16B"). In another implementation, the PCM portion 22" is defined adjacent at least a portion of the inner wall 16A" and the base wall 16B" (e.g., along the entire base wall 16B" and inner wall 16B" as with drinkware container 100', similar to the PCM portion 22' in FIG. 2). Optionally, the drinkware container 100" can have a heat sink (similar to heat sink 20' in container 100') adjacent the PCM 22" (e.g., so that the PCM 22" is disposed between the heat sink and the chamber 16". Optionally, an air gap is defined between an outer surface of the cold side heat sink 80 and the inner wall 16A" of the drinkware container 100".

The cooling unit 150ʺʺ is operable to cool the drinkware container 100" while it is disposed (upside down) on the heat sink 80. For example, the one or more thermoelectric elements 26 can draw heat from heat sink 80 and transfer it to the one or more heat sinks 54, where the heat can be dissipated via the fins of the heat sink 54 and/or the operation of the one or more fans 56. The cooled heat sink 80 can cool at least a portion of the drinkware container 100". For example, the cooled heat sink 80 can cool at least the base wall 16B" and inner wall 16A" through conduction via the base wall 16B". Optionally, the cooled heat sink 80 can charge the PCM 22" (e.g., cause it to transition from one state to another state in which it can later absorb heat when a heated liquid is poured into the chamber 16" and cool or maintain the beverage at a cooled drinking temperature, such as 40 F, 45 F, etc.). The PCM 22" advantageously allows the drinkware container 100" to maintain the beverage poured into the drinkware container 100" in a cooled state for a prolonged period of time (e.g., during a commute, while at work, while at a café).

In one implementation, the cooling unit 150ʺʺ (e.g., cooling rack) can be an appliance that can sit or be stored on a counter (e.g., kitchen counter, café counter) with one or more drinkware containers 100" disposed on the cooling unit 150ʺʺ to keep them in a cooled state ready for use.

Though the cooling unit 150ʺʺ is described and illustrated above in connection with the drinkware container 100", one of skill in the art will recognize that the other drinkware containers described herein (e.g., drinkware container 100, 100') can also be used with the cooling unit 150ʺʺ and such combinations are contemplated in this disclosure.

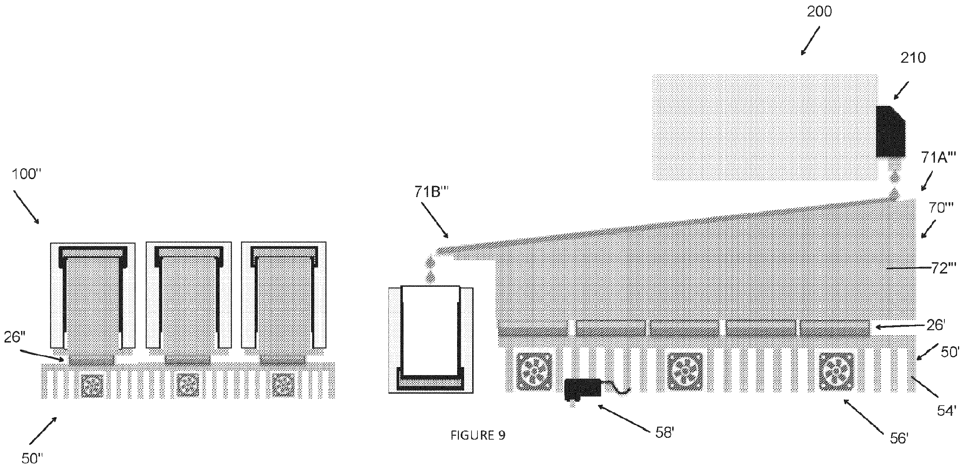

Figure 9 schematically illustrates the cooling unit 150‴ of FIG. 6 at least partially disposed under a beverage dispensing unit 200, and used to dispense a liquid (e.g., cooled coffee, cooled tea) into a drinkware container, such as the drinkware container 100" of FIG. 8A-8B and used in conjunction with the cooling unit 150ʺʺ of FIGS. 8A-8B. Optionally, the drinkware container 100" is cooled on the cooling unit 150ʺʺ as described above in connection with FIGS. 8A-8B, and then disposed to receive a dispensed liquid from the distal end 71B'" of the cooling unit 150"'. As discussed previously, the beverage dispensing unit 200 can dispense a beverage via a nozzle 210 onto the body 72" (e.g., cooling tray) of the cooling unit 150" at or near the proximal end 71A" at a first temperature T0 (e.g., beverage brewed temperature) and the liquid can flow down the body 70" to the distal end 71B" and be dispensed at a second temperature T1 (lower than the first temperature T0) into the drinkware container 100". The drinkware container 100" can maintain the liquid at the second temperature T1 or further cool the liquid to a third temperature T2 (lower than the second temperature T1). Optionally, the drinkware container 100" can maintain the liquid in a cooled state (e.g., via the PCM 22") for an extended period of time, as described above.

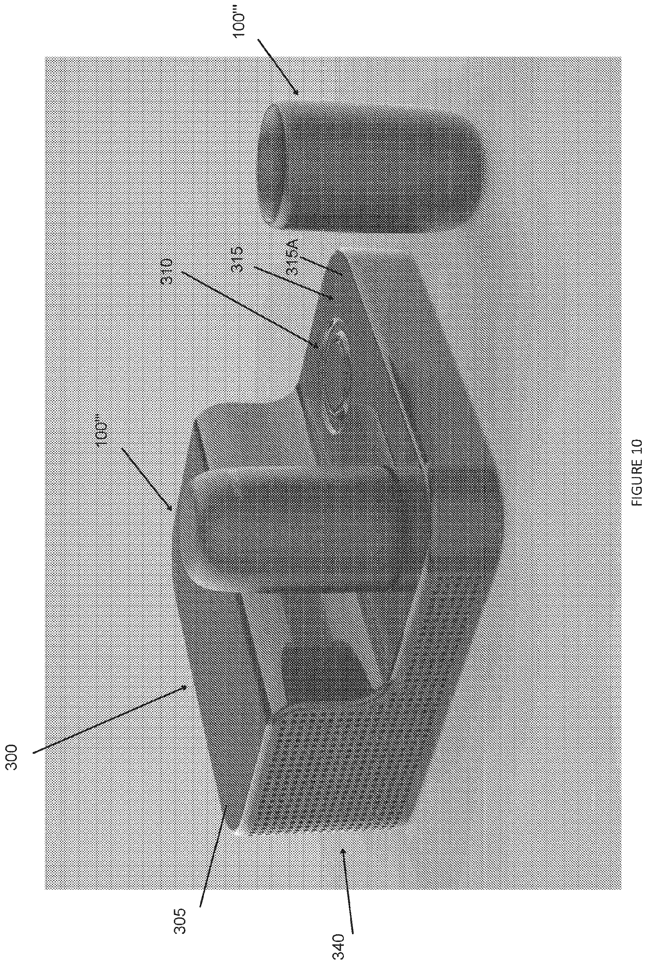

FIGS. 10-11 schematically illustrate a unit 300 (e.g., cooling unit) operable to cool a container 100‴ (e.g., a drinkware container that directly holds a liquid therein, a container that receives and holds another container therein). Some features of the container 100‴ are similar to those of the container 100, 100' in FIGS. 1A-2. Thus, references numerals used to designate the various components of the container 100, 100' in FIGS. 1A-2 are identical to those used for identifying the corresponding components of the container 100‴ in FIGS. 10-11, except that a " ‴ " is added to the numerical identifiers. Therefore, the structure and description for the various components of the container 100, 100' in FIGS. 1A-2 is understood to also apply to the corresponding components of the container 100‴ in FIGS. 10-11, except as described below.

The container 100‴ extends from an opening 13‴ at a proximal end 12‴ to a distal end 14‴ and has an outer wall 11‴ spaced from an inner wall 16A‴ to define a cavity 18‴ therebetween. Optionally, the cavity 18‴ is under vacuum to insulate the inner and outer walls 16A‴, 11‴ from each other. In another implementation, the cavity 18‴ is filled with air. In another implementation, the cavity 18‴ is at least partially filled with an insulative material (e.g., foam). In one implementation, the container 100‴ (e.g., the inner wall 16A'", base wall 16B'", outer wall 11‴) is made of the same material (e.g., a metal, such as stainless steel; a plastic material, a ceramic coated metal material). In another implementation, the inner wall 16A‴ and base wall 16B‴ are made of a different material (e.g., stainless steel) than the outer wall 11‴ (e.g., plastic, ceramic, ceramic covered metal).

The container 100‴ has a chamber 16‴ defined by the inner wall 16A‴ and a base wall 16B'". The container 100‴ optionally also has a phase change material (PCM) 22‴ disposed (e.g., in one or more layers, in a volume within a channel in the cavity 18‴) in thermal communication (e.g., in indirect contact with, in direct contact with) one or both of the inner wall 16A‴ and the base wall 16B'". The PCM 22‴ can optionally be a solid to liquid PCM. In another implementation, the PCM 22‴ can optionally be a solid to solid PCM. In another implementation, the container 100‴ can have a heat sink (similar to heat sink 20' in container 100') disposed in thermal communication with the PCM 22‴ (e.g., so that the PCM 22‴ is interposed between the heat sink and the inner wall 16A‴ and/or base wall 16B‴).

In one implementation, the container 100‴ can receive a liquid beverage (e.g., coffee, tea, water, milk, juice, blended smoothie, beer, wine, distilled spirits) in the chamber 16‴ and maintain the liquid beverage at a cooled temperature T1 (e.g., 40 F, 45 F, 50 F, 55F, etc.) for an extended period of time (e.g., 6 hours or less, 4 hours or less, 2 hours or less, about 1 hour, about 30 minutes, etc.).

In another implementation, the container 100‴ can receive a receptable/container/vessel (not shown, such as bottle, baby bottle) that itself holds a liquid (e.g., coffee, tea, water, milk, breast milk, infant formula, juice, blended smoothie, beer, wine, distilled spirits) in the chamber 16‴ and maintains the liquid in the receptacle/container in a cooled state (e.g., at a cooled temperature of 40 F, 45 F, 50 F, 55F, etc.) for an extended period of time (e.g., 6 hours or less, 4 hours or less, 2 hours or less, about 1 hour, about 30 minutes, etc.). In one implementation, the receptacle/container is held in the chamber 16‴ in a press-fit manner (e.g., in contact with the inner wall 16A‴). In another implementation, a cover (not shown) is attached to the open end 13‴ of the container 100‴ (e.g., via one or more magnets in the cover and/or container 100‴, via a threaded coupling between the cover and the container 100'", via a key-slot mechanism in the cover and/or container 100‴) that retains the receptacle/container within the chamber 16'". In one implementation, the container 100‴ covers at least a portion of the length of the receptacle/container. In another implementation, the container 100‴ covers an entire length of the receptacle/container.

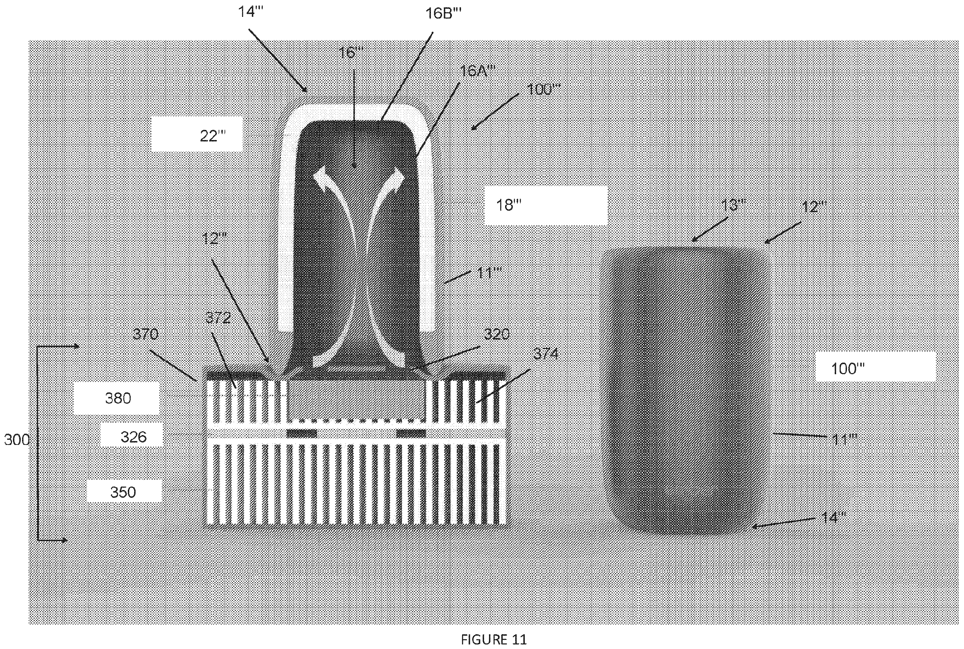

The unit 300 has a body 305 with a platform 315 and one or more docking portions 310. Optionally, the docking portions 310 are recessed relative to a surface 315A of the platform 315. The body can also have one or more openings 340 that allow flow of air into and out of the body 305 as further discussed below. The one or more docking portions 310 can receive the container 100‴ thereon in an upside-down orientation so that the open end 13‴ of the container 100‴ is adjacent (e.g., in contact with) a surface of the docking portion 310. Each docking portion 310 can have one or more openings 320 (see FIG. 11) located thereon so that the openings 320 face the chamber 16‴ of the container 100‴ when the container 100‴ is placed upside down on the docking portion 310. In one implementation, the weight of the container 100‴ maintains it in place over the docking portion 310. In another implementation, the container 100‴ couples to the docking portion 310 via one or more magnets (e.g., located in the container 100‴ and/or the platform 315, such as in the rim of the container 100‴ or under the docking portion 310). In another implementation, the container 100‴ mechanically couples to the docking portion 310 (e.g., in a twist-lock manner via a hook/slot mechanism, or threaded connection, defined in one or both of the container 100‴ and docking portion 310).

The unit 300 has one or more first heat sinks (e.g., cold side heat sinks) 370 disposed in the body 305, one or more second heat sinks (e.g., hot side heat sinks) 350 disposed in the body 305, and one or more thermoelectric elements (TECs) (e.g., Peltier elements) 326 in thermal communication (e.g., direct contact) with, and interposed between, the one of more first heat sinks 370 and one or more second heat sinks 350. The unit 300 also has one or more fans 380 in fluid communication with the one or more first heat sinks 370. In the illustrated embodiment, the one or more fans 380 are disposed within (e.g., integrated in between) a first portion 372 and a second portion 374 of the first heat sink 370 (e.g., integrated into a center portion of the first heat sink 370). However, the one or more fans 380 can be located elsewhere in the body 305 relative to the one or more first heat sinks 370.

In operation, the one or more TECs 326 are operated to draw heat from the one or more first heat sinks 370 and to transfer heat to the one or more second heat sinks 350 to reduce the temperature (e.g., cool) the one or more first heat sinks 370. The one or more fans 380 are operated to flow air past one or more surfaces (e.g., fins) of the one or more first heat sinks 370, thereby cooling said air. In one implementation, the one or more first heat sinks 370 are cooled to a temperature of about 10F-50F and cools the air that flows over it to a temperature of about 10F-50F. The cooled air is directed through the one or more openings 320 into the chamber 16‴ of the container 100‴, where it cools the inner wall 16A‴ and/or base wall 16B‴ of the container 100'''. The cooled air also charges the PCM 22‴ (e.g., causing the PCM 22‴ to transition from one state to another, such as from liquid to solid), allowing the PCM 22‴ to absorb heat once a heated liquid or object (e.g., container) is disposed in the chamber 16‴ of the container 100'". The cooled air can exit the chamber 16‴ via one or more openings (not shown) in the docking portion 310 and exit the body 305 via one or more of the openings 340. In another implementation, the container 100‴ can be placed in the freezer or a cooler (e.g., of a refrigerator) to cool the container 100‴ and charge the PCM 22'".

In another implementation, the unit 300 can be operated to heat air that is injected into the chamber 16‴ of the container 100‴ to heat the inner wall 16A‴ and thereby the PCM 22‴ (e.g. to maintain a beverage, or receptable/container, later placed in the chamber 16‴ in a heated state for an extended period of time). For example, the one or more TECs 326 can be operated to draw heat from the one or more second heat sinks 350 and transfer it to the one or more first heat sinks 370. The one or more fans 380 can then be operated to flow air past one or more surfaces of the one or more first heat sinks 370 to heat the flow of air and the heated air can be injected into the chamber 16‴ via the one of more openings 320.

In some implementations, the cooling unit 150, 150', 150", 150'", 300 is a standalone unit that is separate from (e.g., not integrated into) a beverage preparation and/or dispensing machine. As discussed above, in other implementations the cooling unit 150, 150', 150", 150'", 300 are optionally incorporated into (e.g., integral with, a part of, coupled to, removably coupled to) a beverage dispending machine (e.g., a coffee brewing and/or machine, a tea brewing and/or machine, an infant formula preparation and/or dispensing machine, a beer or wine dispensing machine, a distilled spirits dispensing machine, a water, such as carbonated water, dispensing machine, smoothie preparation and/or dispending machine, pressed juice preparation and/or dispensing machine, etc.). Optionally, these components can be added to an existing beverage dispensing machine in a modular manner (e.g., incorporating one of the cooling unit 150", 150''', but not the cooling unit 150, 150'; incorporating one of the cooling unit 150, 150' but not the cooling unit 150", 150'''; incorporating one of the cooling units 150, 150' and one of the cooling units 150", 150'''; incorporating the cooling unit 300, etc.). Optionally, the electronics in the beverage dispensing machine can control the operation of one or more components of the cooling unit 150, 150', 150", 150'", 300, such as providing power to and/or operating the one or more thermoelectric modules 26, 26', 326 (e.g., turning them on or off or adjusting power to each), providing power to and/or operating the one or more fans 56, 56', 380 (e.g., turning them on or off or adjusting power to each), providing power to and/or operating the dispensing unit (e.g., dispensing unit 200), such as turning it on or off.

In the embodiments described above, any combination of the cooling unit 150, 150', 150", 150'" and/or 300 advantageously reduces the temperature of a beverage dispensed from a beverage dispensing unit (e.g., beverage dispensing unit 200) from a dispensing temperature T0 (e.g., 50F, 60F, 80F, 100F, 170F, 180 F, 190 F, etc.) to a temperature T1 lower than the dispensing temperature. In one embodiment, the temperature T1 is the desired cooled drinking temperature (e.g., 40 F, 45 F, 50 F, 55F, etc.). In another implementation, the temperature T1 is above the desired cooled drinking temperature and the drinkware container 100, 100', 100", 100‴ further reduces the temperature of the liquid to a second temperature T2 below the temperature T1, where the second temperature T2 is the desired cooled drinking temperature.

In one implementation, any combination of the cooling unit 150, 150', 150", 150'" and/or 300 advantageously reduces the temperature of the beverage from the dispensed temperature T0 to the second temperature T1 in 5 minutes or less (e.g., in 4 minutes or less, in 3 minutes or less, in 2 minutes or less, in 1 minute or less, in 30 seconds or less, in about 15 seconds, in about 10 seconds, in about 5 seconds, etc.). Once the liquid is dispensed into the drinkware container 100, 100', 100", 100"', the heat sink 20, 20' and/or PCM 22', 22", 22‴ in the drinkware container 100, 100', 100", 100‴ operates to maintain the liquid at a cooled drinking temperature for a prolonged period of time, as discussed above.

Though the embodiments above describe systems and methods for delivering a cooled beverage into a drinkware container and for the drinkware container to maintain the liquid in a cooled state, one of skill in the art will recognize that the systems and methods for delivering/storing beverages described above, as well as the containers, can be used to heat or maintain a beverage in a heated state and that such implementations are contemplated in this disclosure. For example, the one or more thermoelectric elements 26, 26', 326 can be operated in a reverse manner to heat a heat sink in contact with the container to heat the container. Such a process can be used to pre-heat containers (e.g., using units 150, 150', 150ʺʺ, 300) before they receive a brewed beverage to prolong the heated state of the beverage that is dispensed into the container. Additionally, the units 150", 150'" can be operated (by operating the one or more thermoelectric elements 26' in a reverse polarity manner) to heat the liquid dispensed from the nozzle 210 before it is delivered to the drinkware container.

### Additional Embodiments

In some embodiments, a drinkware system is provided. The drinkware system includes a drinkware container having a container body that extends between a proximal end and a bottom wall at a distal end. The container body has an outer wall and an inner wall spaced inward of the outer wall to define a cavity therebetween, the inner wall extending between an opening at a proximal end of the container body and a base wall. The inner wall and base wall define a chamber configured to receive and hold a liquid, the bottom wall spaced below the base wall and a heat sink disposed in the cavity in thermal communication with one or both of the inner wall and the base wall. The drinkware system also includes a cooling unit configured to removably receive the drinkware container thereon and operable to cool one or both of the heat sink in the drinkware container and the inner wall and/or base wall of the drinkware container. The cooling unit comprises a first heat sink configured to contact the bottom wall of the drinkware container when the drinkware container is placed on the cooling unit, one or more thermoelectric modules in thermal communication with the first heat sink, and a second heat sink in thermal communication with the one or more thermoelectric modules so that the one or more thermoelectric modules are interposed between the first heat sink and the second heat sink. The one or more thermoelectric modules are operable to draw heat from the first heat sink and transfer it to the second heat sink to cool the first heat sink, the cooled first heat sink drawing heat from the drinkware container to cool the drinkware container.

Some embodiments include the drinkware system of any one or more preceding embodiments, wherein the drinkware container is removably coupled to the cooling unit via one or more magnets in one or both of the drinkware container and the cooling unit.

Some embodiments include the drinkware system of any one or more preceding embodiments, wherein the one or more magnets in the cooling unit are electromagnets operable to allow coupling and decoupling of the drinkware container from the cooling unit.

Some embodiments include the drinkware system of any one or more preceding embodiments, wherein the first heat sink comprises one or more PCM portions, the one or more thermoelectric modules operable to charge the one or more PCM portions, allowing the cooling unit to cool a plurality of drinkware containers placed thereon in a sequential manner.

Some embodiments include the drinkware system of any one or more preceding embodiments, further comprising one or more fans in the cooling unit operable to dissipate heat from the second heat sink.

Some embodiments include the drinkware system of any one or more preceding embodiments, further comprising a power connector connectable with a wall outlet to provide power to the cooling unit.

Some embodiments include the drinkware system of any one or more preceding embodiments, further comprising a PCM portion in the drinkware container, the PCM portion disposed in thermal communication with the heat sink in the drinkware container and one or both of the inner wall and base wall of the drinkware container, the PCM portion configured to maintain a liquid dispensed into the chamber in a cooled state for an extended period of time.

In some embodiments, a drinkware system includes a cooling unit configured to receive a beverage from a beverage dispensing unit at a first temperature and to cool the beverage to a second temperature below the first temperature before dispensing the beverage to a drinkware container. The cooling unit comprises a first heat sink configured to receive the dispensed beverage at a proximal end of the first heat sink and extending between the proximal end and distal end, the first heat sink having an inclined surface that inclines upward from the distal end to the proximal end. The cooling unit comprises one or more thermoelectric modules in thermal communication with the first heat sink, and a second heat sink in thermal communication with the one or more thermoelectric modules so that the one or more thermoelectric modules are interposed between the first heat sink and the second heat sink. The one or more thermoelectric modules are operable to draw heat from the first heat sink and transfer it to the second heat sink to cool the first heat sink, the cooled first heat sink cooling the beverage as it flows along a path between the proximal end and the distal end.

Some embodiments include the drinkware system of any one or more preceding embodiments, wherein the path is one of a straight path and a curved path.

Some embodiments include the drinkware system of any one or more preceding embodiments, wherein the path is defined by one or more conduits or one or more channels or grooves in the first heat sink.

Some embodiments include the drinkware system of any one or more preceding embodiments, wherein the first heat sink comprises one or more PCM portions, the one or more thermoelectric modules operable to charge the one or more PCM portions, allowing the cooling unit to cool the liquid dispensed from the beverage dispensing unit in a sequential manner for an extended period of time.

Some embodiments include the drinkware system of any one or more preceding embodiments, further comprising one or more fans in the cooling unit operable to dissipate heat from the second heat sink.

Some embodiments include the drinkware system of any one or more preceding embodiments, further comprising a power connector connectable with a wall outlet to provide power to the cooling unit.

Some embodiments include the drinkware system of any one or more preceding embodiments, further comprising a drinkware container having a container body that extends between a proximal end and a bottom wall at a distal end. The container body has an outer wall and an inner wall spaced inward of the outer wall to define a cavity therebetween, the inner wall extending between an opening at a proximal end of the container body and a base wall. The inner wall and base wall define a chamber configured to receive and hold a liquid, the bottom wall spaced below the base wall and a heat sink disposed in the cavity in thermal communication with one or both of the inner wall and the base wall. A second cooling unit is configured to removably receive the drinkware container thereon and operable to cool one or both of the heat sink in the drinkware container and the inner wall and/or base wall of the drinkware container. The second cooling unit comprises a third heat sink configured to contact the bottom wall of the drinkware container when the drinkware container is placed on the cooling unit, one or more thermoelectric modules in thermal communication with the first heat sink, and a fourth heat sink in thermal communication with the one or more thermoelectric modules so that the one or more thermoelectric modules are interposed between the third heat sink and the fourth heat sink. The one or more thermoelectric modules are operable to draw heat from the third heat sink and transfer it to the fourth heat sink to cool the third heat sink, the cooled third heat sink drawing heat from the drinkware container to cool the drinkware container.

Some embodiments include the drinkware system of any one or more preceding embodiments, wherein the drinkware container is removably coupled to the second cooling unit via one or more magnets in one or both of the drinkware container and the second cooling unit.

Some embodiments include the drinkware system of any one or more preceding embodiments, wherein the one or more magnets in the second cooling unit are electromagnets operable to allow coupling and decoupling of the drinkware container from the second cooling unit.

Some embodiments include the drinkware system of any one or more preceding embodiments, wherein the third heat sink comprises one or more PCM portions, the one or more thermoelectric modules operable to charge the one or more PCM portions, allowing the second cooling unit to cool a plurality of drinkware containers placed thereon in a sequential manner.

Some embodiments include the drinkware system of any one or more preceding embodiments, further comprising one or more fans in the second cooling unit operable to dissipate heat from the fourth heat sink.

Some embodiments include the drinkware system of any one or more preceding embodiments, further comprising a drinkware container having a container body that extends between a proximal end and a bottom wall at a distal end, the container body having an outer wall and an inner wall spaced inward of the outer wall to define a cavity therebetween. The inner wall extends between an opening at a proximal end of the container body and a base wall, the inner wall and base wall defining a chamber configured to receive and hold a liquid dispended from the distal end, the bottom wall spaced below the base wall.

Some embodiments include the drinkware system of any one or more preceding embodiments, wherein the drinkware container comprises a heat sink disposed in the cavity in thermal communication with one or both of the inner wall and the base wall.

Some embodiments include the drinkware system of any one or more preceding embodiments, wherein the drinkware container further comprises a PCM portion disposed in thermal communication with one or both of the inner wall and base wall of the drinkware container, the PCM portion configured to maintain a liquid dispensed into the chamber in a cooled state for an extended period of time.

In some embodiments, a drinkware system includes a drinkware container having a container body that extends between a proximal end and a bottom wall at a distal end, the container body having an outer wall and an inner wall spaced inward of the outer wall to define a cavity therebetween. The inner wall extends between an opening at a proximal end of the container body and a base wall, the inner wall and base wall defining a chamber configured to receive and hold a liquid, the bottom wall spaced below the base wall and a PCM disposed in the cavity in thermal communication with one or both of the inner wall and the base wall. The drinkware system includes a cooling unit configured to removably receive the drinkware container in an upside-down orientation thereon and operable to cool one or both of the PCM in the drinkware container and the inner wall and/or base wall of the drinkware container. The cooling unit comprises a first heat sink configured to contact one or both of the base wall and the inner wall of the drinkware container when the drinkware container is placed upside down on the cooling unit, one or more thermoelectric modules in thermal communication with the first heat sink, and a second heat sink in thermal communication with the one or more thermoelectric modules so that the one or more thermoelectric modules are interposed between the first heat sink and the second heat sink. The one or more thermoelectric modules are operable to draw heat from the first heat sink and transfer it to the second heat sink to cool the first heat sink, the cooled first heat sink drawing heat from the drinkware container to cool the drinkware container and to charge the PCM, allowing the drinkware container to maintain a liquid later dispensed therein in a cooled state.

Some embodiments include the drinkware system of any one or more preceding embodiments, further comprising one or more fans in the cooling unit operable to dissipate heat from the second heat sink.

Some embodiments include the drinkware system of any one or more preceding embodiments, further comprising a power connector connectable with a wall outlet to provide power to the cooling unit.

Some embodiments include the drinkware system of any one or more preceding embodiments, wherein the first heat sink is a plurality of first heat sinks, each configured to receive a drinkware container thereon in an upside-down orientation.

In some embodiments, a heating or cooling system for a container is provided. The system comprises a thermal unit having a body that defines a platform and one or more docking stations on the platform, the body having one or more openings in an outer surface of the body through which air is configured to pass. The thermal unit comprises a first heat sink configured to be in thermal communication with one or more surfaces of the body and/or one or more openings in the one or more docking stations, one or more thermoelectric modules in thermal communication with the first heat sink, and a second heat sink in thermal communication with the one or more thermoelectric modules so that the one or more thermoelectric modules are interposed between the first heat sink and the second heat sink. The one or more thermoelectric modules are operable to draw heat from one of the first and second heat sink and transfer it to the other of the first and second heat sink to thereby cool or heat the first heat sink. One or more fans in fluid communication with the first heat sink and configured to generate a flow of air past the first heat sink and through the one or more openings in the one or more docking stations, the flow of air being cooled or heated as it flows past the first heat sink and through the one or more openings in the one or more docking stations.

Some embodiments include the heating or cooling system of any one or more preceding embodiments, wherein the thermal unit is integrated in a beverage preparation and/or dispensing machine.

Some embodiments include the heating or cooling system of any one or more preceding embodiments, wherein the beverage preparation and/or dispensing machine is a coffee or tea brewing and/or dispensing machine.

Some embodiments include the heating or cooling system of any one or more preceding embodiments, wherein the beverage preparation and/or dispensing machine is an infant formula preparation and/or dispensing machine.

Some embodiments include the heating or cooling system of any one or more preceding embodiments, further comprising one or more containers configured to be removably disposed upside down on the one or more docking stations so that said cooled or heated air flows into a chamber of the container and cools or heats one or more inner surfaces of the container.

Some embodiments include the heating or cooling system of any one or more preceding embodiments, wherein the container further comprises a volume of phase change material disposed between an inner wall of the container and an outer wall of the container, the inner wall spaced apart from the outer wall, said cooled or heated air configured to charge the phase change material to allow it to provide extended cooling or heating of contents later placed in the chamber of the container.

Some embodiments include the heating or cooling system of any one or more preceding embodiments, wherein the phase change material is in thermal contact with one or both of the inner wall of the container and a base wall of the container.

Some embodiments include the heating or cooling system of any one or more preceding embodiments, wherein the container includes a cavity between the inner wall of the container and the outer wall of the container.

Some embodiments include the heating or cooling system of any one or more preceding embodiments, wherein the cavity is under vacuum.

Some embodiments include the heating or cooling system of any one or more preceding embodiments, wherein said contents includes a liquid that contacts one or more the inner wall and a base wall of the container.

Some embodiments include the heating or cooling system of any one or more preceding embodiments, wherein said contents includes a receptacle insertable into the chamber of the container to be in thermal communication with the phase change material, the receptacle configured to receive and hold a liquid therein.

Some embodiments include the heating or cooling system of any one or more preceding embodiments, wherein the receptacle is configured to receive and hold one of milk, breast milk and infant formula therein.

While certain embodiments of the inventions have been described, these embodiments have been presented by way of example only and are not intended to limit the scope of the disclosure. Indeed, the novel methods and systems described herein may be embodied in a variety of other forms. For example, though the features disclosed herein are in describe for drinkware containers that have the form factor of a cup or mug, other form factors are contemplated (e.g., beer mugs, wine glasses, water bottles, carafes). Also, the features disclosed are applicable to containers that are not drinkware containers (e.g., dishware, such as plates and bowls, serverware such as serving dishes and hot plates, food storage containers such as tortilla warmers, bread baskets) and the invention is understood to extend to such other containers. Furthermore, various omissions, substitutions and changes in the systems and methods described herein may be made without departing from the spirit of the disclosure. The accompanying claims and their equivalents are intended to cover such forms or modifications as would fall within the scope and spirit of the disclosure. Accordingly, the scope of the present inventions is defined only by reference to the appended claims.

Features, materials, characteristics, or groups described in conjunction with a particular aspect, embodiment, or example are to be understood to be applicable to any other aspect, embodiment or example described in this section or elsewhere in this specification unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The protection is not restricted to the details of any foregoing embodiments. The protection extends to any novel one, or any novel combination, of the features disclosed in this specification (including any accompanying claims, abstract and drawings), or to any novel one, or any novel combination, of the steps of any method or process so disclosed.

Furthermore, certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a claimed combination can, in some cases, be excised from the combination, and the combination may be claimed as a subcombination or variation of a subcombination.

Moreover, while operations may be depicted in the drawings or described in the specification in a particular order, such operations need not be performed in the particular order shown or in sequential order, or that all operations be performed, to achieve desirable results. Other operations that are not depicted or described can be incorporated in the example methods and processes. For example, one or more additional operations can be performed before, after, simultaneously, or between any of the described operations. Further, the operations may be rearranged or reordered in other implementations. Those skilled in the art will appreciate that in some embodiments, the actual steps taken in the processes illustrated and/or disclosed may differ from those shown in the figures. Depending on the embodiment, certain of the steps described above may be removed, others may be added. Furthermore, the features and attributes of the specific embodiments disclosed above may be combined in different ways to form additional embodiments, all of which fall within the scope of the present disclosure. Also, the separation of various system components in the implementations described above should not be understood as requiring such separation in all implementations, and it should be understood that the described components and systems can generally be integrated together in a single product or packaged into multiple products.

For purposes of this disclosure, certain aspects, advantages, and novel features are described herein. Not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Conditional language, such as "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than 10% of, within less than 5% of, within less than 1% of, within less than 0.1% of, and within less than 0.01% of the stated amount. As another example, in certain embodiments, the terms "generally parallel" and "substantially parallel" refer to a value, amount, or characteristic that departs from exactly parallel by less than or equal to 15 degrees, 10 degrees, 5 degrees, 3 degrees, 1 degree, or 0.1 degree.

The scope of the present disclosure is not intended to be limited by the specific disclosures of preferred embodiments in this section or elsewhere in this specification, and may be defined by claims as presented in this section or elsewhere in this specification or as presented in the future. The language of the claims is to be interpreted broadly based on the language employed in the claims and not limited to the examples described in the present specification or during the prosecution of the application, which examples are to be construed as non-exclusive.

## Claims

1. A drinkware system, comprising:
a cooling unit (150") configured to receive a beverage from a beverage dispensing unit (200) at a first temperature and to cool the beverage to a second temperature below the first temperature before dispensing the beverage to a drinkware container (C), the cooling unit (150") comprising:
a first heat sink (70") with a body (72") made of a thermally conductive material, the body (72") extending between a proximal end (71A") and a distal end (71B");
one or more thermoelectric modules (26') in thermal communication with the first heat sink (70"); and
a second heat sink (50') in thermal communication with the one or more thermoelectric modules (26') so that the one or more thermoelectric modules (26') are interposed between the first heat sink (70") and the second heat sink (50');
wherein the one or more thermoelectric modules (26') are operable to draw heat from the first heat sink (70") and transfer it to the second heat sink (50') to cool the first heat sink (70"); and
wherein the first heat sink (70") is configured to receive the dispensed beverage at the proximal end (71A") of the first heat sink (70") and to cool the beverage as it flows along a path between the proximal end (71A") and the distal end (71B").

2. The drinkware system of claim 1, wherein the first heat sink (70") comprises one or more volumes of phase change material (74") via which the first heat sink (70") can function as a cold storage reservoir.

3. The drinkware system of claim 1 or 2, wherein the path is defined by one or more conduits or one or more channels or grooves in the first heat sink (70").

4. The drinkware system of claim 1 or 2, wherein:
the body (72") comprises an inclined surface (76") that extends from the proximal end (71A") to the distal end (71B") with the inclined surface inclined upward from the distal end (71A") to the proximal end (71B");
the inclined surface (76") has a groove or recessed channel defined therein that extends from the proximal end (71A") to the distal end (71B"); and
the cooling unit (150") is configured for a dispensed beverage to flow along the groove or recessed channel defined in the inclined surface (76") to the distal end (71B") for dispensing into a drinkware container (C).

5. The drinkware system of claim 4, wherein the groove or recessed channel is configured to inhibit liquid from exiting the inclined surface (76") other than over a drinkware container (C).

6. The drinkware system of claim 1 or 2, wherein the path is defined by one or more channels or tubes inside the body (72") and the cooling unit (150") is configured for a dispensed beverage to flow through the one or more channels or tubes inside the body (72").

7. The drinkware system of any preceding claim, wherein the path is a curved path between the proximal end (71A") and the distal end (71B"), optionally wherein the path is a zig-zag or labyrinthine path.

8. The drinkware system of any preceding claim, further comprising one or more fans (56') in the cooling unit (150") operable to dissipate heat from the second heat sink (50').

9. The drinkware system of any preceding claim, further comprising a power connector (58') connectable with a wall outlet to provide power to the cooling unit (150").

10. The drinkware system of any preceding claim, wherein the system is a beverage dispensing machine that comprises the cooling unit (150") and the beverage dispensing unit (200).

11. The drinkware system of claim 10, wherein the beverage dispensing unit (200) comprises a dispensing nozzle (210) configured to dispense a beverage onto the cooling unit (150").

12. The drinkware system of claim 10 or 11, wherein the body (72") is removable from the beverage dispensing machine.

13. The drinkware system of claim 10, 11, or 12, wherein the beverage dispensing machine comprises a second cooling unit (150') configured for cooling a drinkware container (C) disposed thereon, and wherein the beverage dispensing machine is configured for a beverage to be dispensed from the distal end (71B") of the body (72") into a drinkware container (C) disposed on the second cooling unit (150').

14. The drinkware system of any preceding claim, wherein the first temperature is from 170 F to 190 F and the second temperature is from 40 F to 55 F.

15. The drinkware system of any preceding claim, wherein the cooling unit (150") is configured to reduce the temperature of a beverage from the first temperature to the second temperature in 5 minutes or less, and optionally in 4 minutes or less, 3 minutes or less, 2 minutes or less, 1 minute or less, 30 seconds or less, or about 15 seconds or less.
